# EUROPÄISCHE PATENTSCHRIFT

(11) **EP 0 714 694 B1**
(45) Veröffentlichungstag und Bekanntmachung des Hinweises auf die Patenterteilung: **02.02.2000**
(21) Anmeldenummer: 95117297.2
(22) Anmeldetag: 03.11.1995
(51) Int. Cl.: B01F 3/04, C02F 3/20

(54) **Schlauch zum Belüften von fliessfähigen Medien**
Hose for aerating fluid media
Tuyau pour l'aération de matériaux fluides

(30) Priorität: 03.12.1994 DE 9419439 U
(43) Veröffentlichungstag der Anmeldung: 05.06.1996
(73) Patentinhaber: REHAU AG + Co, 95111 Rehau (DE)
(72) Erfinder: Wurm, Hans-Robert, c/o Rehau AG+CO, D-95111 Rehau (DE)

(56) Entgegenhaltungen:
- EP-A- 0 482 332
- DE-A- 3 218 460
- DE-A- 4 223 942

## Beschreibung

Die Erfindung betrifft einen Schlauch zum Belüften von fließfähigen Medien mit Umfangsperforationen zum feinblasigen Gaseintrag in das flüssige Medium.

Für eine Vielzahl technischer Anwendungen und insbesondere zur Aufrechterhaltung der biologischen Abbauprozesse während der biologischen Abwasserreinigung ist der Eintrag von Sauerstoff in eine Flüssigkeit von besonderer Bedeutung. Das Funktionsprinzip der dafür erforderlichen Einrichtungen sieht einen in der Regel am Boden eines Flüssigkeitsbehälters installierten Hohlkörper vor, der eine Perforation aufweist, durch deren Öffnungen das unter Druck in den Hohlkörper eingebrachte gasförmige Medium entweicht. Aufgrund der großen benötigten Sauerstoffmengen fallen hierbei beträchtliche Energiekosten an.

Damit ist eine Voraussetzung für eine energiesparende Begasung der feinblasige Gaseintrag in die flüssige Phase. Dafür sind Belüftungselemente in Form von Kerzen, Tellern, Platten und Schläuchen bekannt. Als bekannter Stand der Technik werden hierfür benannt:

| | |
|---|---|
| DE 32 24 177 A1 | DE 36 32 772 C1 |
| DE 93 18 675 U1 | DE 86 14 739 U1 |

Diese Vorveröffentlichungen sind nur beispielhaft angegeben, da auf diesem Gebiet eine große Anzahl von geschützten und nicht geschützten Verfahren und Vorrichtungen bekannt sind.

Bei den bekannten Belüftungseinrichtungen besteht in der Regel das Problem darin, daß eine Luftblaseneinschnürung in der begasten Flüssigkeit über dem jeweiligen Belüfter stattfindet. Dadurch kommt es zu einer vermehrten Vereinigung kleinerer Blasen miteinander zu größeren Blasen.

Dieses Phänomen wird in der Fachwelt mit dem Begriff "Coaleszenz" belegt. Durch solche Coaleszenz-Vorgänge wird der Gaseintrag in die Flüssigkeit erheblich beeinträchtigt.

Um diesen Nachteil zu vermeiden wird in der DE 36 32 772 C1 das Element zum Gaseintrag ringförmig, vorzugsweise kreisringförmig gestaltet. Dieses Element hat eine zentrische Mittelöffnung, wodurch sich ein erheblicher Verlust an zur Verfügung stehender Begasungsfläche ergibt. Dadurch entsteht ein höherer Druckverlust im Begaser selbst, wodurch sich an der Begasungsfläche wiederum eine größere Blasengröße einstellt. Zur Vermeidung dieses Nachteils muß der in den Begaser eintretende Gasvolumenstrom reduziert werden, wodurch die Menge der zu installierenden Belüfter in einem Begasungsbecken erhöht und die Investitionskosten für den Betreiber vergrößert werden.

In der DE 86 14 739 U1 ist eine schlauchförmige Einrichtung zur Belüftung von Medien beschrieben. Das schlauchförmige Belüftungselement weist am Umfang verteilte Durchlaßöffnungen auf, die in unbelastetem Zustand geschlossen sind, sich bei zunehmender Druckbeaufschlagung des Hohlraums zum Gasauslaß öffnen.

Der Nachteil einer solchen Umfangsperforation eines Schlauchbelüfters ist darin zu sehen, daß der Schlauch beim Druckabbau durch den von außen anstehenden Flüssigkeitsdruck zusammengelegt wird. Die Perforationen an den Randbereichen des zusammengelegten Schlauches werden durch die beim Zusammenlegen auftretenden Biegespannungen nicht oder nicht vollständig geschlossen, so daß hier die außen anstehende Flüssigkeit in das Innere des zusammengelegten Schlauches eindringen kann.

Auch im Bereich der Schlauchanschlüsse weist die Umfangsperforierung des Schlauchbelüfters Nachteile auf. Im Bereich der Verbindungsstelle des Schlauchbelüfters mit der Gaszuführungseinrichtung wird durch den Auftrieb beim Gaszutritt der Schlauch mehr oder weniger nach oben ausgelenkt.

Im Bereich dieser Auslenkung werden die Perforationen gedehnt, so daß an dieser Stelle größere Blasen austreten als in den nicht ausgelenkten Perforationsbereichen. Diese größeren Blasen sind aber für die erwünschte Belüftungsmaßnahme ungeeignet. Ferner können sich bei einer Abschaltung des Gasstromes, der ja mit seinem Druck den Belüfterschlauch aufbläht, die Schlauchhälften direkt am Übergang im Anschlußbereich nicht aufeinanderlegen, so daß die Perforationen in diesem Bereich mehr oder weniger geöffnet bleiben. Auch dadurch kann die Flüssigkeit in das Schlauchinnere eintreten. Hierdurch wird ein innerer Stützkern notwendig, auf dem der Belüfterschlauch gegen äußeren Überdruck abdichtet.

Hier setzt die Erfindung ein, die es sich zur Aufgabe gestellt hat, die Nachteile des Standes der Technik zu vermeiden und einen Schlauch zur Belüftung von Medien anzugeben, welcher im Anschluß- und seitlichen Knickbereich den Eintritt von Flüssigkeit in das Schlauchinnere verhindert. Erfindungsgemäß wird dazu vorgeschlagen, daß der Schlauch an seinen freien Enden im Bereich der Verbindung mit einer Schlauchtülle am gesamten Umfang frei von Perforationen gehalten ist, und daß darüberhinaus Teilbereiche des Schlauchumfangs längsverlaufend perforationsfreie Wandungsbereiche aufweisen, welche diametral gegenüberliegend die beim Zusammenlegen des Schlauches entstehenden Knickstellen bilden.

Daß der erfindungsgemäße Schlauch an seinen freien Enden frei von Perforationen gehalten ist, bedeutet, daß der Einspannbereich des Schlauches oberhalb der Schlauchtülle und darüberhinaus in einer vorgegebenen Länge ungelocht bleibt. Dadurch wird verhindert, daß bei der Gasbeaufschlagung und dem daraus resultierenden Auftrieb des Schlauches nach oben die Schlitze in diesem Bereich gedehnt werden. Es wird also auf diese Weise verhindert, daß im Anschlußbereich die schädlichen großen Blasen, die durch Dehnung der erweiterten Schlitze entstehen würden, entstehen können.

Aus der DE 32 18 460 A1 ist ein Rohrsystem zum Belüften von Wasser bekannt, das aus einem Stützrohr und einem aufgezogenen Abdeckschlauch besteht. Das Stützrohr besitzt an diametral gegenüberliegenden Stellen hintereinanderliegende Schlitze, deren Breite etwa der Wanddicke des Stützrohres entspricht. Auf dieses Stützrohr ist ein biegsamer Schlauch aufgezogen, der eine Vielzahl von feinen Schlitzöffnungen aufweist, die sich außerhalb des Bereichs der Schlitze im Stützrohr befinden. Im Bereich von Bögen dieses Rohrsystems können die Schlitze im Stützrohr und/oder die Schlitzöffnungen des Schlauches entfallen.

Auch der dadurch bedingte Druckabfall und der Flüssigkeitseintritt bei äußerem Überdruck werden verhindert.

Die erfindungsgemäß längsverlaufend perforationsfreien Wandungsbereiche des Schlauches haben einmal zur Folge, daß der Schlauch bei der Herstellung der Perforationen - dies ist in der Regel eine Vernadelung - im Flankenbereich keine größeren Durchtrittsöffnungen erhält, aus denen wiederum größere Blasen mit den geschilderten Nachteilen austreten könnten. Darüberhinaus wird durch diese perforationsfreien Wandungsbereiche verhindert, daß die Poren bei der Abschaltung des Gasdrucks und dem nachfolgenden Zusammenlegen des Schlauches durch den Flüssigkeitsdruck von außen an den Flanken in ungeschlossenem Zustand verharren, wodurch Flüssigkeit in das Innere des Schlauches eindringen könnte.

In einer vorteilhaften Ausbildung sind im Bereich der längsverlaufenden perforationsfreien Wandungsbereiche nach außen gerichtete, längsverlaufende Stege an der Schlauchoberfläche angeformt. Diese Stege gewährleisten zum einen die lagerichtige Orientierung des Schlauches beim Herstellen der Öffnungen durch Vernadeln und ferner beim Einbau des Schlauches in die Belüftungseinrichtung, zum anderen erhöhen sie das Widerstandsmoment des Schlauches gegen Torsion.

Eine weitere vorteilhafte Ausbildung sieht vor, daß im Bereich der längsverlaufenden perforationsfreien Wandungsbereiche auf der Schlauchaußenseite diametral gegenüberliegende Nuten eingeformt sind.

Diese Nuten stellen Soll-Knickstellen dar, die ein definiertes Zusammenlegen bei äußerem Überdruck gewährleistet.

Der perforationsfreie Umfangsbereich an den freien Enden des Schlauches kann in seiner Längenabmessung der allgemeinen Formel E=T+D+f_{E} folgen. Dabei ist E die Länge des perforationsfreien Umfangsbereiches, T die Länge des Belüftungsschlauches auf der Schlauchtülle, D der Durchmesser des Schlauches und f_{E}≧1. Die Vorteile dieser Maßnahme sind bereits im einzelnen dargelegt worden.

Die längsverlaufenden perforationsfreien Wandungsbereiche folgen erfindungsgemäß der allgemeinen Formel K=2xsxf_{K}, wobei K die Breite des längsverlaufenden, perforationsfreien Wandungsbereiches, s die Wanddicke des Schlauches und f_{K} ≧ 1 ist. Auch die dadurch bedingten Vorteile sind bereits beschrieben worden.

Die erfindungsgemäßen Begaserschläuche sind frei zwischen den Gaszuführungsvorrichtungen auf deren Schlauchtüllen eingespannt. Es entfallen somit die bei herkömmlichen Begasersystemen erforderlichen Abdichtelemente zwischen einer Trägerkonstruktion und dem Begasungsteil. Dadurch ist das Auftreten von Undichtigkeiten im Betrieb praktisch ausgeschlossen.

Mit den erfindungsgemäßen Begaserschläuchen wird ein Strömungsbild des Gases in der Flüssigkeit erzielt, welches durch kleine Luftblasen gekennzeichnet ist. Diese kleinen Luftblasen werden durch die Strömung von der Begaserschlauchoberfläche bereits abgeschert und in das flüssige Medium eingetragen, bevor sie die kritische Blasengröße erreicht haben. Hierbei wird aufgrund des Schlauchdurchmessers die Coaleszenz kleiner Luftblasen weitestgehend vermieden. Da die gleichen Blasen an der Schlauchunterseite genauso auftreten wie an der Schlauchoberseite wird auch eine Strömung auf dem Beckengrund erzielt, die das Absetzen von Belebtschlamm zuverlässig verhindert.

In der Zeichnung sind Ausführungsbeispiele des erfindungsgemäßen Begaserschlauches schematisch dargestellt; es zeigt:
Fig. 1 den Schlauch im Einspannbereich auf der Schlauchtülle
Fig. 2 den Schlauch gemäß Fig.1 ohne Druckbeaufschlagung von innen
Fig. 3 den Schlauch gemäß Fig.2 im Schnitt längs der Linie E-E
Fig. 4 den Schlauch gemäß Fig.1 im Schnitt längs der Linie D-D.

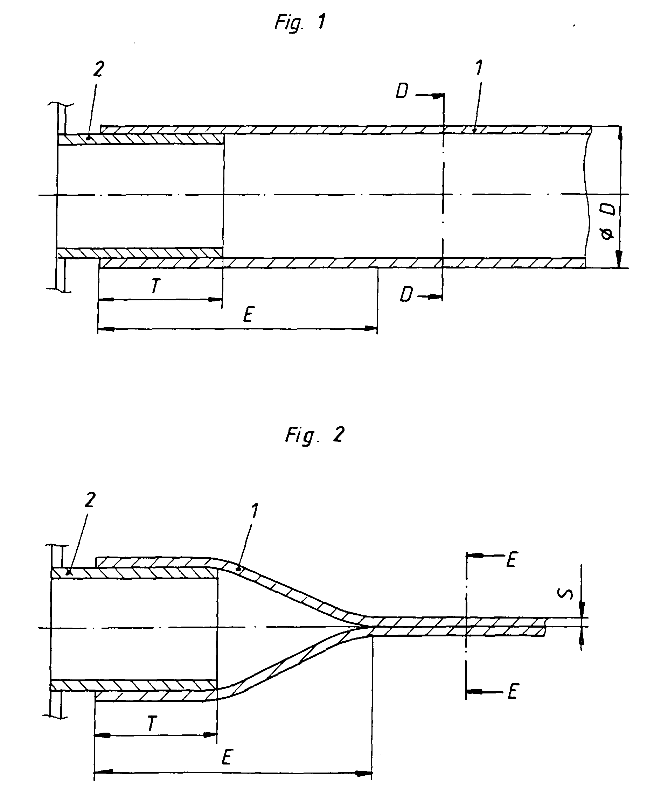

Fig. 1 zeigt den Schlauch 1 im Einspannbereich auf der Schlauchtülle 2. Die Schlauchtülle 2 gehört zu der vorgeschalteten Begasungsvorrichtung, die in der Zeichnung nicht dargestellt ist. Der Schlauch 1 selbst ist in der Länge abgeschnitten dargestellt und die Darstellung zeigt nicht die Einspannung des Schlauches am gegenüberliegenden freien Ende. Diese Einspannung ist jedoch spiegelbildlich zum gezeigten Einspannungsbereich und kann somit in der Zeichnung vernachlässigt werden.

Die Länge E bezeichnet den perforationsfreien Umfangsbereich des Schlauches 1, von dem die Teillänge T auf der Schlauchtülle 2 aufgezogen ist. Mit D ist der Durchmesser des Schlauches gekennzeichnet. Das Gas tritt über die Tülle 2 und den Bereich der Länge des perforationsfreien Umfangsbereiches E des Schlauches, der nicht auf der Tülle 2 aufgespannt ist, in den lichten Querschnitt des Schlauches mit den perforierten Wandungsbereichen ein. Von dort tritt er über die Perforation in Pfeilrichtung aus dem Schlauchlumen in die umgebende Flüssigkeitsatmosphäre aus.

In Fig. 2 ist der Schlauch 1 gemäß Fig.1 ohne Druckbeaufschlagung von innen dargestellt. Aufgrund des äußeren Flüssigkeitsüberdruckes ist der Schlauch 1 im Bereich der Perforation zusammengelegt. Der Übergangsbereich zwischen der zusammengelegten Schlauchform und des auf die Tülle 2 aufgebrachten Schlauchendes T verläuft konisch bis zum Tüllenrand. Da in diesem Bereich keine Perforationen in die Schlauchoberfläche eingebracht sind, ergeben sich keine nachteiligen Porenöffnungen.

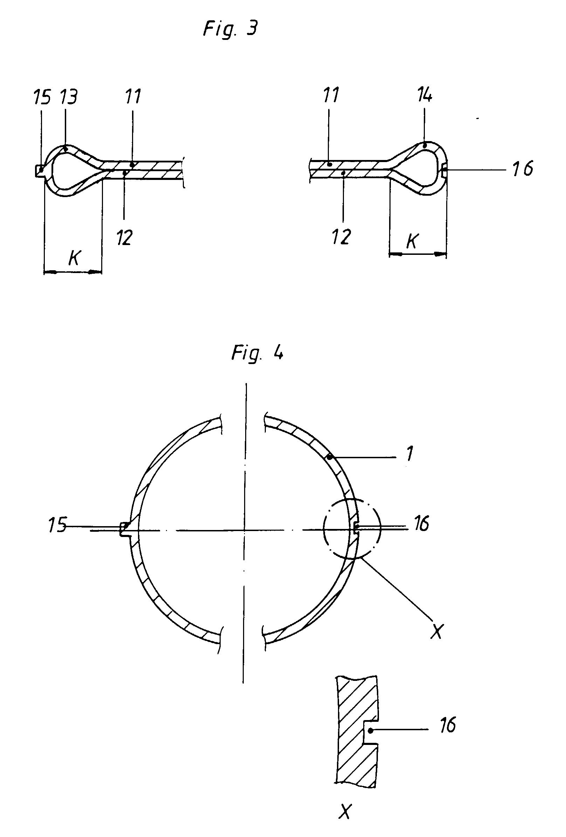

Der in Fig. 3 gezeigte Schnitt durch den Schlauch 1 gemäß Fig.2 längs der Linie E-E zeigt, daß der Schlauch mit seinen perforierten Bereichen 11, 12 aufgrund des äußeren Flüssigkeitsdruckes zusammengepreßt ist. Die Randbereiche 13, 14 in ihrer unperforierten Form sind nicht zusammengepreßt, sondern bilden längsverlaufende Durchgangsöffnungen an den Schlauchrändern.

Axial verlaufend sind an den höchsten Punkten dieser Wandbereiche die Stege 15 oder Nuten 16 angeformt. Diese Stege 15 oder Nuten 16 erleichtern u.a. das Zusammenlegen des Schlauches 1 mit seinen perforierten Bereichen 11, 12.

In Fig. 4 ist schließlich der mit Innendruck beaufschlagte Schlauch 1 im Querschnitt längs der Linie D-D in Fig.1 dargestellt. Auch hier sind die beiden Alternativen der Wandbereiche mit einerseits den Stegen 15 und andererseits den Nuten 16 gezeigt. Die Mitteltrennung des gezeichneten Schlauchquerschnitts besagt, daß beiderseits die Stege 15 anoder beiderseits die Nuten 16 ausgeformt sind.

## Patentansprüche

1. Schlauch zum Belüften von fließfähigen Medien mit Umfangsperforationen zum feinblasigen Gaseintrag in das fließfähige Medium, wobei der Schlauch im Bereich von Abbiegungen frei von Umfangsperforationen gehalten ist, dadurch gekennzeichnet, daß die von Perforationen freien Umfangsbereiche des Schlauches (1) an seinen freien Enden im Bereich der Verbindung (T) mit einer Schlauchtülle (2) liegen, und daß darüber hinaus Teilbereiche des Schlauchumfangs längsverlaufend perforationsfreie Wandungsbereiche (13, 14) aufweisen, welche diametral gegenüberliegend die beim Zusammenlegen des Schlauches (1) entstehenden Knickstellen bilden.

2. Schlauch nach Anspruch 1, dadurch gekennzeichnet, daß der perforationsfreie Umfangsbereich (13, 14) an den freien Enden des Schlauches in seiner Längenabmessung der allgemeinen Formel E = T + D x f_{E} folgt, wobei E die Länge des perforationsfreien Umfangsbereiches darstellt, T die Länge des Schlauches (1) auf der Schlauchtülle (2), D den Durchmesser des Schlauches (1) und f_{E} ≥ 1 ist.

3. Schlauch nach Anspruch 1, dadurch gekennzeichnet, daß die längsverlaufenden perforationsfreien Wandungsbereiche (13, 14) der allgemeinen Formel K = 2 x s x f_{K} folgen, wobei K der längsverlaufende perforationsfreie Wandungsbereich, s die Wanddicke des Schlauches und f_{K} ≥ 1 ist.

4. Schlauch nach Ansprüchen 1 und 3, dadurch gekennzeichnet, daß im Bereich der längsverlaufenden perforationsfreien Wandungsbereiche (13, 14) nach außen gerichtete, längsverlaufende Steg (15) an der Schlauchoberfläche angeformt sind.

5. Schlauch nach Ansprüchen 1 und 3, dadurch gekennzeichnet, daß im Bereich der längsverlaufenden perforationsfreien Wandungsbereiche (13, 14) in die Schlauchaußenseite diametral gegenüberliegende Nuten (16) eingeformt sind.

## Claims

1. A hose for aerating free-flowing media with peripheral perforations for introducing fine gas bubbles into the free-flowing medium, the hose being kept free of peripheral perforations in the area of bends, is characterized in that the peripheral areas of the hose (1 ) free of perforations lie at the free hose ends in the area of the connection (T) with a hose nipple (2) and, furthermore, that sections of the hose periphery have diametrically opposing, perforation-free wall areas (13, 14) running axially that form the break points which arise during folding of the hose (1).

2. A hose according to Claim 1, characterized in that the length of the peripheral area free of perforations (13, 14) at the free hose ends follows the general formula E = T + D x f_{E}, where E is the length of the area free of peripheral perforations, T is the length of the hose (1 ) on the hose nipple (2), D is the hose diameter (1 ) and f_{E} ≥ 1.

3. A hose according to Claim 1, characterized in that the axially running wall areas free of perforations (13, 14) follows the general formula K = 2 x s x f_{K}, where K is the axially running wall area free of perforations, s is the hose-wall thickness, and f_{K} is ≥ 1.

4. A hose according to Claims 1 and 3, characterized in that in the region of the axially running wall areas free of perforations (13, 14), molded ribs (15) run axially along the outside surface of the tube.

5. A hose according to Claims 1 and 3, characterized in that diametrically opposite grooves (16) are molded in the region of the axially running perforation-free wall areas (13, 14),

## Revendications

1. Tuyau pour aérer des fluides coulants, doté de perforations périphériques pour le passage de gaz sous forme de bulles dans le fluide coulant, le tuyau étant exempt de perforations au niveau des plans médians, caractérisé en ce que les extrémités libres des zones du tuyau sans perforations (1) sont au contact de l'embout à olive (2) au niveau du raccord (T) et en ce que des zones du tuyau présentent dans le sens longitudinal des zones de paroi sans perforations (13,14), lesquelles forment les croquages diamétralement opposés lorsqu'on replie le tuyau (1).

2. Tuyau selon la revendication 1, caractérisé en ce que la longueur de la zone sans perforations (13, 14) aux extrémités libres du tuyau est régie par la formule E = T + D x f_{E}, E représentant la longueur de la zone sans perforation, T la longueur du tuyau (1) sur l'embout à olive (2), D le diamètre du tuyau (1) et f_{E} étant ≥ 1.

3. Tuyau selon la revendication 1, caractérisé en ce que les zones de paroi longitudinales sans perforations (13, 14) sont régies par la formule générale K = 2 x s x f_{K}, K représentant la zone de paroi longitudinale sans perforations, s l'épaisseur de paroi du tuyau et f_{K} étant ≥ 1.

4. Tuyau selon les revendications 1 et 3, caractérisé en ce que des nervures longitudinales orientées vers l'extérieur (15) sont formées à la surface du tuyau au niveau des parois sans perforations (13, 14).

5. Tuyau selon les revendications 1 et 3, caractérisé en ce que des rainures (16) diamétralement opposées sont formées sur le côté extérieur du tuyau au niveau des parois sans perforations (13, 14).
